# EUROPEAN PATENT SPECIFICATION

(11) **EP 2 165 912 B1**
(45) Date of publication and mention of the grant of the patent: **25.04.2012**
(21) Application number: 08290886.4
(22) Date of filing: 19.09.2008
(51) Int. Cl.: B61F 5/24, G01P 15/08, G01M 17/10, G01P 15/00

(54) **Instability monitoring device and system, in particular for a rail vehicle**
Instabilitätsüberwachungsvorrichtung und -system, insbesondere für ein Schienenfahrzeug
Dispositif de suivi de l'instabilité et système, en particulier pour un véhicule ferroviaire

(43) Date of publication of application: 24.03.2010
(73) Proprietor: Bombardier Transportation GmbH, 10785 Berlin (DE)
(72) Inventor: Baert, Mike, 8200 Brügge (BE)
(74) Representative: Broydé, Marc

(56) References cited:
- EP-A- 0 195 921
- FR-A- 2 067 801
- US-A1- 2004 102 918
- US-B1- 6 786 458

## Description

### TECHNICAL FIELD OF THE INVENTION

The invention relates to a system for monitoring the stability of a rail vehicle. More generally, it relates to a safety system for monitoring the stability of distributed components and to distributed devices in such a system.

### BACKGROUND ART

Conventional bogies are provided with passive stabilisation means like yaw dampers or friction plates, which counteract the tendency of the bogies to follow a sinusoidal path. These stabilisation means are also used to increase the speed - called "instability limit" - at which the rather smooth sinusoidal run deteriorates into bogie hunting, causing bad ride comfort, high forces between wheels and rails and eventually a risk of derailment.

To minimize the risk of hazardous run e.g. caused by defective yaw dampers, the TSI HS (Technical Specification of Interoperability - High-Speed) released by the European Commission contains the requirement to install a means on board of high-speed trains, which can detect instability in the bogie movement of a train.

An algorithm for detecting the running instability of bogies of rail passenger vehicles is defined in UIC leaflet 515.5. According to this algorithm, instability is detected whenever the lateral acceleration of the bogie frame above a predetermined threshold in the range of 4Hz to 8Hz presents more than a predetermined number (e.g. 6) of consecutive peaks above a predetermined threshold (e.g. 8 m/s²) with a predetermined period of time (e.g. 500 ms).

An instability monitoring system for a bogie is known from EP 1 197 739. The bogie is provided with two longitudinal accelerometers located on each side of a longitudinal centre plane of the bogie. Signals from the two accelerometers are compared and processed to determine if they differ by more than a predetermined amount, in which case an alarm signal is triggered.

A vibration monitoring system for a rail vehicle is known from the documents DE 100 20 519, DE 100 20 520 and DE 100 20 521. One or more accelerometers, preferably tri-axial accelerometers, are connected to a central signal processing unit located at a remote location on the train consist. While this type of configuration may prove adapted to the monitoring of specific vehicle subsystems like brakes, bogies or car bodies for diagnostic purposes, it does not provide the level of safety and reliability required for safety components. In particular, the transmission of the acceleration signals from the accelerometers to the remote processing unit may suffer from an insufficient signal to noise ratio.

FR 2 067 801 discloses an instability monitoring device including an accelerometer for monitoring the stability of the bogie of a locomotive, connected to a relay via a wired analog logic circuit, to change the state of the relay based on an instability condition of the acceleration signal and turn on or off a warning light.

A method for indicating the dynamic instability of railway or tramway rolling stock is described in EP 0 195 921. The method essentially consists in detecting, by means of at least one accelerometer sensor, the acceleration of the wheel arrangement of the rolling stock in a direction transverse the direction of travel, suitably processing it and subsequently comparing, in a suitable comparator, the processed acceleration value with a reference value. The indication of instability is obtained by checking whether the number of processed acceleration values which exceed the said reference value is greater than a predetermined number in a predetermined period of time

An apparatus for recording changes associated with the acceleration of a structure is disclosed in US 2004/0102918. The apparatus includes an accelerometer array having at least one silicon beam type accelerometer, a nonvolatile memory, a clock timer, a programmable control unit operatively coupled to the accelerometer array, a non-volatile memory, and clock timer. The accelerometer array, the non-volatile memory, the clock timer and the programmable control unit can be formed on a common semiconductor substrate (e.g., integrated), with the accelerometer array disposed in a central region.

The existing attempts to implement an instability detection device are based on sensors (e.g. accelerometers) and a remote software-based processing unit, which lacks the ability to fulfil the safety and reliability requirements of CENELEC Standards EN 50126 - 50129 and hence cannot be certified as being safe. While the risk of instability is reduced by the installation of such devices, it cannot be brought down to 0, since an undetected malfunction of the monitoring device during unstable run is still possible.

### SUMMARY OF THE INVENTION

The foregoing shortcomings of the prior art are addressed by the present invention. According to one aspect of the invention, there is provided an instability monitoring device for a rail vehicle, comprising:
- at least a first accelerometer for delivering a first acceleration signal in response to vibration along a reference axis,
- at least a first solid-state safety relay, having two main terminals and being switchable between a closed state and an open state, and
- a programmable logic device connected to the first accelerometer and to the first solid-state relay, the programmable logic device being a field programmable gate array (FPGA) or a complex programmable logic device (CPLD) provided with non-volatile logic blocks running simultaneously in parallel and implementing an instability monitoring algorithm to change the state of the first solid-state relay based on an instability condition of the first acceleration signal wherein the programmable logic device includes a non-volatile erasable and reprogrammable memory.

The safety loop is based on the switching of the solid-state relay, which makes it possible to mount the circuit on the hard environment of the bogie, where the implementation of electro-mechanical relays would not be possible.

Thanks to the use of an hardware base, and in particular to the implementation of a programmable logic device (PLD) for running the instability detection algorithm, the instability monitoring device meets the requirements of the CENELEC standard and can be assigned a Safety Integrity Level (SIL).

Obviously, the application is not limited to the railway industry and similar advantages are experienced in other systems or applications combining severe external conditions and high safety requirements.

Preferably, the programmable logic device can be a field-programmable gate array (FPGA) or a complex programmable logic device (CPLD), which can be provided with a non-volatile erasable and reprogrammable memory such as a flash memory. Hence, there is no need for a configuration device to put the code into the PLD cells. The PLD is immediately operational after start-up.

According to a preferred embodiment, the instability monitoring algorithm includes:
- pre-processing the first acceleration signal
- detecting peaks of the pre-processed acceleration signal which are higher than a predetermined acceleration threshold,
- incrementing a counter if the time between two consecutive peaks is within a predetermined time window,
- activating the solid-state safety relay if the counter reaches or exceeds a predetermined counter threshold, and
- resetting the counter if no peak has been detected within a predetermined period of time.

This algorithm is based on the requirements defined in UIC leaflet 515.5. The time window has a lower limit (e.g. 150 ms) and an upper limit (e.g. 250 ms), which provide the equivalent in time of the limited bandwidth in the frequency spectrum considered in the standard.

Advantageously, the pre-processing of the first acceleration signal includes processing the first acceleration signal through a low-pass filter and a high-pass filter. The low-pass filter is used to eliminate high frequency noise, while the high-pass filter is used to eliminate DC offset, which may be due to an inadequate positioning of the instability monitoring device.

According to a preferred embodiment, the instability monitoring device further comprises a second accelerometer for delivering a second acceleration signal in response to vibration along the reference axis, the second accelerometer being connected to the programmable logic device, the instability monitoring algorithm changing the state of the first solid-state relay based on an instability condition of the first and second acceleration signals. The use of two accelerometers adds redundancy to the system. Advantageously, each of the first and second accelerometers comprises: an inertia mass movable between a rest position and two opposite limits parallel to the reference axis and an internal test circuit for moving the inertia mass from a rest position towards one of the two opposite limits in one testable direction. The testable directions of the first and second accelerometers are opposite to one another, the acceleration signals generated by the first and second accelerometer in response to movements of each inertia mass between the rest position and the other of the two limits in the direction opposite to the testable direction being disregarded by the programmable logic device. Accelerometers of this type are well-known in the art. The internal circuit may include a capacitive plate cooperating with the inertia mass and connected to a test terminal, such that application of a DC voltage to the test terminal results in a motion of the inertia mass in the testable direction, which simulates a constant acceleration in that direction. The signal generated by the accelerator can be used to test the instability monitoring algorithm in the testable direction. When two such, preferably identical, accelerometers are placed on the same printed circuit board opposite to one another, it becomes possible to implement an instability monitoring algorithm which takes into account only the part of the acceleration signals that can actually be tested.

Advantageously, the first solid-state relay is open in the absence of a control signal and the programmable logic device interrupts the control signal to change the state of the first solid-state relay based on an instability condition of the first acceleration signal. Hence, any loss of power in the instability monitoring device will result in a change of state of the safety relay, which will give a clear indication of the failure of the system.

According to a preferred embodiment, the device further comprises a second solid-state relay connected to the programmable logic device, the algorithm being such as to change the state of the second solid-state relay based on the instability condition of the first acceleration signal. The use of two safety relays adds redundancy to the system. Advantageously, the change of state of the first solid-state relay is triggered by the interruption an AC control signal controlled by the programmable logic device while the change of state of the second solid-state relay is triggered by the interruption of a DC control signal controlled by the programmable logic device. Hence, a scenario in which the programmable logic device is blown up and delivers a constant high DC control voltage will be detected on the first solid-state relay, because of the interruption of the AC control signal.

According to a preferred embodiment, there is also provided a printed circuit board for receiving the programmable logic device, the first solid-state safety relay and the first accelerometer and, if provided, the second solid-state safety relay and the second accelerometer.

Advantageously, the device may also be provided with a test circuit comprising:
- a test power supply,
- a test current detector,
- test switch means for switching the instability monitoring device between a test mode and an operational mode, such that in the test mode the main terminals of the safety switch are connected between the local test power supply and the local measuring device while in the operational state the main terminals of the safety switch are disconnected from the local test power supply.

The test circuit is used to carry out integrity tests on the safety solid-state relay. If the device includes two safety solid-state relays, two test circuit can be provided, which can share one test power supply and, according to one variant, one current detector.

According to another aspect of the invention, there is provided an instability monitoring system for a rail vehicle comprising:
- a plurality of distributed instability monitoring devices as described hereinbefore,
- a safety loop interconnecting the first solid-state safety relays of the plurality of instability monitoring devices in series.

Preferably, the safety loop is provided with:
- a power supply for feeding the safety loop,
- a fault detector for detecting a change of state of at least one of the first state safety relays of the plurality of instability monitoring devices.

The fault detector can be a current detector. The opening of any of the safety solid-state relays due to an instability detected by one of the distributed instability monitoring devices will be immediately detected by the fault detector. The malfunction of any of the distributed instability monitoring devices will also result in the opening of at least one of the safety solid-state relays and will also be detected by the fault detector.

According to a further aspect of the invention there is provided a rail vehicle provided with a plurality of bogies and with an instability monitoring system according as described hereinbefore, wherein each bogie is provided with at least one of the instability monitoring devices of the instability monitoring system.

### BRIEF DESCRIPTION OF THE DRAWINGS

Other advantages and features of the invention will become more clearly apparent from the following description of specific embodiments of the invention given as non-restrictive example only and represented in the accompanying drawings in which:
figure 1 is a block diagram of an instability monitoring device according to the invention;
figure 2 illustrates a couple of a self-testable micro-electromechanical accelerometers of in the instability monitoring device of figure 1;
figure 3A to 3K illustrate the processing of acceleration signal by the instability monitoring device of figure 1;
figure 4A illustrates test circuits used for testing safety solid-state relays of the instability monitoring device of figure 1;
figure 4B illustrates a variant of figure 4A; and
figure 5A illustrates an instability monitoring system including a plurality of instability monitoring devices of the type illustrated in figure 1;
figure 5B illustrates a variant of figure 5A.

### DETAILED DESCRIPTION OF VARIOUS EMBODIMENTS

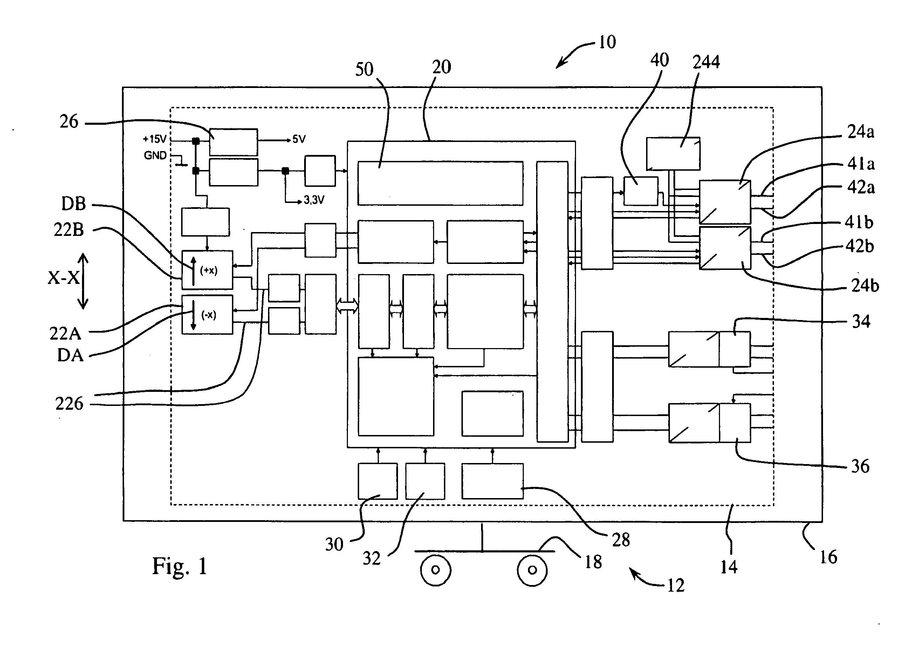

Referring to figure 1, an instability monitoring device 10 dedicated to the monitoring of the instability of a bogie 12 includes a printed circuit board 14 mounted in a box 16 fixed to a bogie frame 18. The circuit board 14 is built around a programmable logic device (PLD) 20 having two identical lateral accelerometers 22A, 22B as main inputs and two solid-state safety relays 24a, 24b as main outputs. The system is also equipped, besides the necessary power supply circuits 26, with a temperature sensor 28, a clock circuit 30, a watchdog circuit 32, an input for test demands 34 and outputs for indication of instability 36.

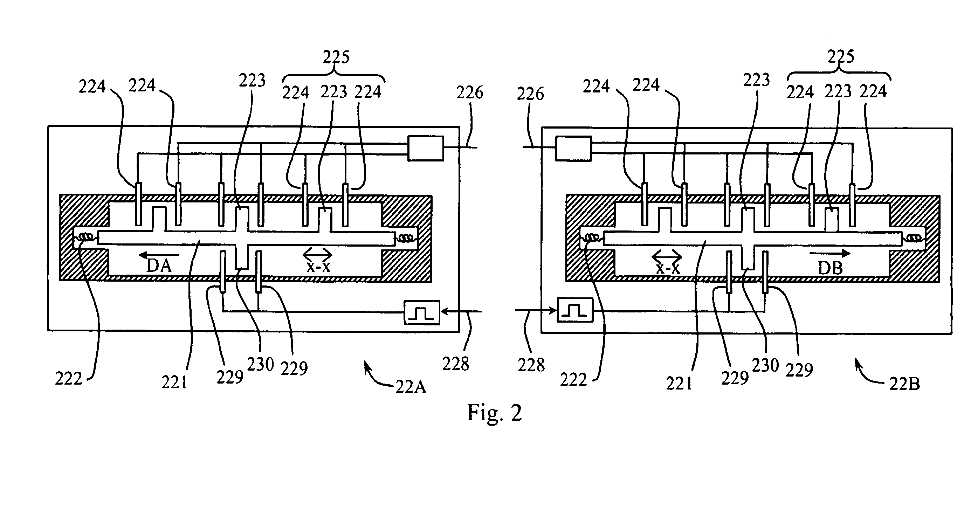

The two lateral acceleration sensors 22A, 22B, depicted in figure 2, are preferably of the MEMS (Micro-Electro-Mechanical System) type. This type of accelerometer is well-known in the art (e.g. reference SCA 1000 of VTI Technologies). The accelerometers 22A, 22B include an inertia mass in the form of a polysilicon beam 221 suspended over a substrate by supporting tethers 222. The beam 221, which is essentially parallel to the substrate, is elongated along a reference axis X-X, and provided with a number of plates 223 that extend away from the beam in a direction perpendicular to the axis of the beam. The beam and plates 223 are movable laterally relative to the substrate along the axis X-X. Each of these movable plates 223 is positioned between two polysilicon plates 224 that are perpendicular to the beam 221 and are fixed relative to the substrate. Each movable plate 223 and the fixed plates 224 on either side of the movable plate form a differential capacitor cell 225. The cells additively form a differential capacitor. Instead of polysilicon, the accelerometer may be made of other materials known in the art, such as monocrystalline silicon.

Different approaches can be used to sense acceleration with such a differential capacitor. The movable plates (i.e., movable with the mass) are each centred between two fixed plates in a rest position. All the fixed plates on one side of the movable plates are electrically coupled together and charged, and all the fixed plates on the other side of the movable plates are also electrically coupled together and charged. In response to an external force/acceleration along the reference axis, the mass with movable plates moves toward one or the other set of fixed plates, thus changing the capacitance between the different plates, which produces an electrical signal. This signal on the fixed plates is amplified, processed and provided to an output terminal 226.

To verify proper operation of the sensors 22A, 22B, a self-test input terminal 228 is provided. Activating self-test causes a step function force to be applied to the accelerometer 22 in a testable direction DA, DB parallel to the reference axis X-X. More specifically, activating the self-test via the self-test input terminal 228 causes the voltage on at least a pair of the fixed plates 229 on one side of the moving beam 221 in a test cell 231 to change. This creates an attractive electrostatic force on a test plate 230 integral with the movable beam 221, causing the beam 221 to move from the rest position toward in a testable direction. This sensor displacement in the testable direction changes the signal seen at the sensor output terminal 226.

Remarkably, the two identical accelerometers 22A, 22B are oriented in opposite directions on the printed circuit board, which means that their output have identical absolute instantaneous values and opposite signs when the printed circuit board is subjected to vibration. This also means that their reference axes X-X are aligned and that their testable directions DA, DB are opposite to one another.

The accelerometers 22A, 22B are connected to the programmable logic device PLD via an analog to digital converter A/DC. The programmable logic device can be a field-programmable gate array (FPGA) or a complex programmable logic device (CPLD). It is provided with non-volatile logic blocks running simultaneously in parallel and implementing an instability monitoring algorithm to change the state of the first and second solid-state relays from an active state to a fault state whenever an instability condition is detected.

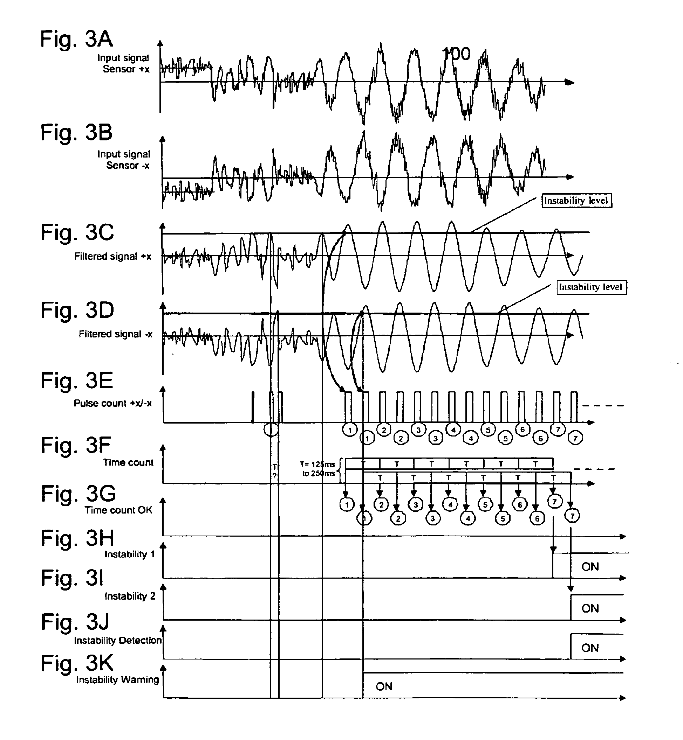

The digitalised acceleration signals from the first and second accelerometers, illustrated in figure 3A and 3B, respectively, are processed in parallel channels as depicted in figures 3C to 3K. When entering the programmable logic device, the digitalised acceleration signal of each accelerometer is first filtered using numerical band-pass filters. The band-pass filter consists of a low-pass and a high-pass second order Butterworth filters. The high-pass filter is used to eliminate signal offset. Its cutoff frequency (the -3dB frequency) is 3Hz. The low-pass filter has a cutoff frequency between 30 and 40 Hz to eliminate noise. The resulting filtered signals are shown in figure 3C and 3D. Peaks of the filtered signals above a predetermined threshold are detected as illustrated in figure 3E. The threshold is set for each accelerometer 22A, 22B in the direction corresponding to the corresponding testable direction DA, DB (i.e. a positive threshold in this example). Peaks of each acceleration signal in the direction opposite to the testable direction are not taken into account. Starting from zero, a counter is incremented for each accelerometer when consecutive peaks are detected within a predetermined time window, e.g. when two consecutive peaks are distant from one another by more than 125 ms and less than 250 ms, as illustrated in figure 3F. More precisely, a timer is started after each incrementation of the counter. If the time between the last counted peak and the new peak (measured by the timer) is less than 120 ms or more than 250 ms but less than 500 ms, the counter is not updated. The counter and the timer are reset to 0 if no peak has been detected during a period T=500 ms after the last peak or if peaks less than 125ms or more than 250ms apart are detected after the period of 500ms. An instability signal is delivered whenever the counter reaches N for one accelerometer as illustrated in figure 3H and 3I, in which case the timer and counter are also reset. An instability detection signal is delivered when an instability signal is detected for both accelerometers, as illustrated in figure 3J. A warning signal can also be delivered at an earlier stage, e.g. as soon as the first or second peak is detected on both channels, as illustrated in figure 3K. Remarkably, the algorithm used for detecting instabilities uses only one part of each acceleration signal, namely the part that corresponds to the testable direction of each accelerometer.

Each safety solid-state relay 24a, 24b is provided with two output terminals 41 a, 42a, 41 b, 42b and is designed to change its state from an active state to a fault state upon change of the corresponding control signal on a control input terminal. The first and second solid-state relays 24a, 24b act as "normally open" contacts, which means that they are closed when energised and open in the absence of control signal. More specifically, an AC control signal of predetermined frequency (e.g. 1000 Hz) is supplied by the programmable logic device 20 to a frequency detector 40 connected to the first solid-state relay 24a in the absence of instability to maintain the first solid-state relay in its active, closed state. In the same circumstances, a DC control signal is supplied by the programmable logic device 20 to the second solid-state relay 24b to maintain it in the closed state. The detection of instability triggers the interruption of the two control signals and the opening of the two safety solid-state relays 24a, 24b.

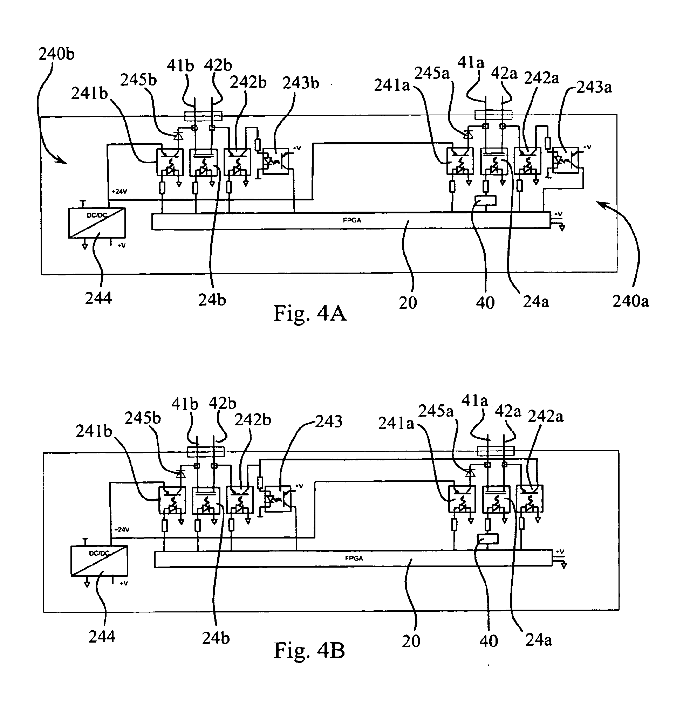

Referring to figure 4A, the solid-state relay 24a is provided with a local test circuit 240a including two test switches 241 a, 242a and a test current detector 243a. An upstream branch of the local test circuit 240a connects one of the test switches 241 a in series between one terminal 41 a of the solid-state relay and the positive terminal of a local test DC power supply 244. A diode 245a can be provided in the upstream branch to prevent current backflow into the local test power supply. The downstream branch of the local test circuit connects the other output terminal 42a of the solid-state relay to the second test switch 242a and the latter to the test current detector 243a which is connected to the ground defined by the negative terminal of the local test power supply 244 to close the circuit. The current detector 243a is used to detect the presence of current through the terminals 41 a, 42a of the solid-state relay when the first and second test switches 241 a, 242a are closed as well as the solid-state relay. The second solid-state relay 24b is provided with a similar test circuit using the same power supply 244, and the corresponding parts have been designated in figure 4A with the same reference numbers, using a "b" as suffix instead of "a". As shown in the variant of figure 4B, a common current detector 243 can be used instead of two separate current detectors 243a and 243b.

The solid-state relays 24a, 24b, the pairs of test switches 241, 242 and the current detector 243 are connected to the programmable logic device 20 and are realised as optocouplers so that their connections to the programmable logic device 20 are fully isolated from their connections to the test circuit.

The programmable logic device 20 is also provided with a finite state machine 50 (see figure 1) for performing a series of tests for checking the operability of the instability monitoring device.

In a first test sequence, the switching of the solid-state relays is checked. The programmable logic device 20 closes the test switches 241, 242 of the first solid-state relay 24a and interrupts the AC control signal for a predetermined duration while the response of the first solid-state relay 24a is checked by the test current detector 243. If a current is detected by the test current detector 243 during the interruption of the AC control signal the test has failed and the state machine goes to the start-up fault state. Subsequently, the test is repeated for the second solid-state relay 24b, with the appropriate DC control signal being interrupted and switched back ON by the programmable logic device.

In a second test sequence, the internal test circuits of the accelerometers are used to simulate a test pattern that corresponds to an instability situation. A series of N voltage pulses is applied to the test terminals of the two accelerometers. The two accelerometers should then react with 80% of their full scale value and generate N peaks above the detection threshold. After N peaks, the instability monitoring algorithm should generate an instability signal and trigger the two solid-state switches. If no instability signal is generated, the test has failed and the state machine 50 goes to the start-up fault state.

Remarkably, the use of two accelerometers 22A, 22B oriented in opposite directions in each instability monitoring device makes it possible to selectively detect in the actual monitoring algorithm the peaks of each accelerometer signal that corresponds to movements of the inertia mass from the rest position in the testable direction, which has actually been tested. In other words, the peak threshold of the algorithm is set so that the peaks of the accelerometer signal in the direction opposite to the testable direction, i.e. the direction for which the internal test circuit of the accelerometer do not allow testing, are disregarded.

The instability monitoring devices may include other tests, e.g. temperature measurements. The temperature measured by a temperature sensor is compared with lower and upper limits (e.g. between -40 and 95 °C). If the temperature is not within the predefined window, an alarm is triggered.

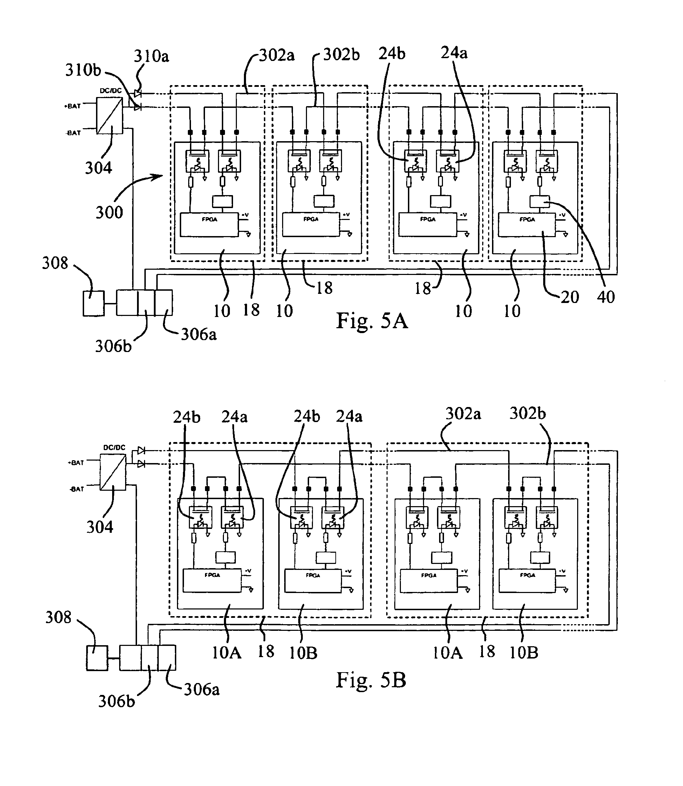

As illustrated in figure 5A, the instability monitoring device is duplicated on at least some of the bogie frames 18 of the rail vehicle, and preferably on all bogies, to build an instability monitoring system 300, which includes two safety loops 302a, 302b, one for connecting the first safety relays 24a of the instability monitoring devices 10 in series in a closed circuit including a DC power supply, e.g. a battery unit 304 and a common current detector 306a connected to an alarm 308 in the driver's cab, to a speed control system and/or to a brake control system of the vehicle, and the second one (306b) for connecting in the same conditions the second safety relays 24b of the instability monitoring devices 10 in series between the power supply 304 and a current detector 306b. Diodes 310a, 310b are also provided on the safety loops to prevent current backflow into the DC power supply 304.

Any interruption of the current detected a current detector 306a, 306b in the safety loop is considered as an instability event and results in appropriate action, e.g. operation of the alarm 308, decrease of the driving power and/or operation of the brakes of the rail vehicle.

The ground of each local test DC power supply 244 is isolated, so that the first test sequence referred to above can be carried out simultaneously on all first safety relays 24a, with superposition of the DC power of the safety loop 302a. However, the first and second safety relays of each unit should preferably be tested sequentially to avoid unreliable results, since it is envisaged that both safety loops are connected in series.

The instability monitoring system is provided with a test bus for performing controlling the start-up tests various tests on the distributed system to check its operability. The test bus is used to send test request to the instability monitoring device and gather the results.

To test the integrity of the safety loop cabling in a configured train, a special vehicle test can be executed. The instability monitoring devices of the last car shall be shutdown and powered again by means of the circuit-breaker of the rail car. This action will open and close the safety loop at this location and this will be verified in the driver's cab. If this test is positive it is considered that the whole safety loop is working. If not, the action shall be repeated on the instability monitoring device which is located directly upstream and this until the error is found. In such a case, the error in the cabling will be situated between the unit for which the loop is functioning and the next unit downstream.

As a variant, the two safety loops can be connected in series between a common power supply and a common current detector.

To limit availability problems in case of failure of one of the instability monitoring devices, it is also envisaged to provide each bogie with a first instability monitoring device 10A and a second instability monitoring device 10B, as illustrated in figure 5B. The safety relays 24a and 24b of each instability monitoring device are connected in series. The safety relays 24a, 24b of the first instability monitoring devices 10A are connected to a first safety loop 302A and the safety relays 24a, 24b of the second instability monitoring devices are connected to a second safety loop 302B. When one instability monitoring device is in failure and interrupts one of the safety loops, operation can be continued on the other safety loop.

The invention is not limited to the embodiments described hereinbefore.

If redundancy of the acceleration measurements is not critical, a single accelerometer can be used. Preferably, the single accelerometer should have two testable directions, i.e. it should be provided with test means for moving the inertia mass of the accelerometer on both sides of its rest position. The accelerometer or accelerometers can be biaxial or triaxial, in which case the signal from the additional axes can be simply disregarded or processed in parallel with the signal from the first axis. The signals from different axes can also be combined to build an acceleration vector, which will be processed by the programmable logic device. The accelerometers can be of any convenient type, e.g. based on piezoelectric transducers.

The instability monitoring algorithm can have many variants. In particular, the use of a time window with a lower and an upper threshold for counting the peaks can be replaced by more sophisticated numerical filters for disregarding the parts of the signal that are not in the observed frequency range.

If redundancy of the safety solid-state relays is not critical, one option is to eliminate one of the two solid-state relays, in which case the instability monitoring system will be provided with one safety loop only.

The instability monitoring system, which has been used in connection with a rail vehicle, can also implemented in various complex systems in which distributed acceleration measurements are necessary to determine an instability condition, e.g. aircrafts or turbines of a power plant.

## Claims

1. An instability monitoring device (10) for a rail vehicle, comprising:
- at least a first accelerometer (22A) for delivering a first acceleration signal in response to vibration along a reference axis (X-X),
- at least a first solid-state safety relay (24a), having two main terminals (41 a, 42a) and being switchable between a closed state and an open state,
**characterised in that** the instability monitoring device (10) further comprises:
- a programmable logic device (20) connected to the first accelerometer (22A) and to the first solid-state safety relay (24a), the programmable logic device (20) being a field programmable gate array (FPGA) or a complex programmable logic device (CPLD) provided with non-volatile logic blocks running simultaneously in parallel and implementing an instability monitoring algorithm to change the state of the first solid-state safety relay (24a) based on an instability condition of the first acceleration signal, wherein the programmable logic device (20) includes a non-volatile erasable and reprogrammable memory.

2. The instability monitoring device of claim 1, wherein the instability monitoring algorithm includes:
- pre-processing the first acceleration signal
- detecting peaks of the pre-processed acceleration signal which are higher than a predetermined acceleration threshold,
- incrementing a counter if the time between two consecutive peaks is within a predetermined time window,
- activating the solid-state safety relay (24a) if the counter reaches or exceeds a predetermined counter threshold, and
- resetting the counter if no peak has been detected within a predetermined period of time.

3. The instability monitoring device of any of the preceding claims, wherein the pre-processing of the first acceleration signal includes processing the first acceleration signal through a low-pass filter and a high-pass filter.

4. The instability monitoring device of any of the preceding claims, further comprising a second accelerometer (22B) for delivering a second acceleration signal in response to vibration along the reference axis (X-X), the second accelerometer (22B) being connected to the programmable logic device (20), the instability monitoring algorithm changing the state of the first solid-state safety relay (24a) based on an instability condition of the first and second acceleration signals.

5. The instability monitoring device of any of the preceding claims, wherein each of the first and second accelerometers (22A, 22B) comprises:
- an inertia mass (221) movable between a rest position and two opposite limits parallel to the reference axis (X-X) and
- an internal test circuit for moving the inertia mass (221) from a rest position towards one of the two opposite limits in one testable direction (DA, DB),
wherein the testable directions of the first and second accelerometers (22A, 22B) are opposite to one another the acceleration signals generated by the first and second accelerometer (22A, 22B) in response to movements of each inertia mass (221) between the rest position and the other of the two limits in the direction opposite to the testable direction being disregarded by the programmable logic device (20).

6. The instability monitoring device of any of the preceding claims, wherein the first solid-state safety relay (24a) is open in the absence of a control signal and the programmable logic device (20) interrupts the control signal to change the state of the first solid-state safety relay (24a) based on an instability condition of the first acceleration signal.

7. The instability monitoring device of any of the preceding claims, further comprising a second solid-state relay (24b) connected to the programmable logic device (20) the algorithm being such as to change the state of the second solid-state safety relay (24a) based on the instability condition of the first acceleration signal.

8. The instability monitoring device of claim 7, wherein the change of state of the first solid-state safety relay (24a) is triggered by the interruption an AC control signal controlled by the programmable logic device (20) while the change of state of the second solid-state safety relay (24a) is triggered by the 20 interruption of a DC control signal controlled by the programmable logic device (20).

9. The instability monitoring device of any of the preceding claims, further comprising a printed circuit board (14) for receiving the programmable logic device (20), the first solid-state safety relay (24a) and the first accelerometer (22A) and, if provided, the second solid-state safety relay (24b) and the second accelerometer (22B).

10. The instability monitoring device of any of the preceding claims, further provided with a test circuit (240a) comprising:
- a local test power supply (244),
- a local test current detector (243a),
- test switches (241 a, 242a) for switching the instability monitoring device (10) between a test mode and an operational mode, such that in the test mode the main terminals of the safety switch are connected between the local test power supply (244) and the local measuring device while in the operational state the main terminals of the safety switch are disconnected from the local test power supply (244).

11. An instability monitoring system (300) for a rail vehicle comprising:
- a plurality of distributed instability monitoring devices (10, 10A, 10B) according to any one of the preceding claims,
- a safety loop (302, 302A, 302B) interconnecting the first solid-state safety relays (24a) of the plurality of instability monitoring devices (10, 10A, 10B) in series.

12. The instability monitoring system of claim 11, wherein the safety loop (302, 302A, 302B) is provided with:
- a power supply (304) for feeding the safety loop (302, 302A, 302B),
- a fault detector (306a, 306b), for detecting a change of state of at least one of the first state safety relays (24A) of the plurality of instability monitoring devices (10, 10A, 10B).

13. A rail vehicle provided with a plurality of bogies (12) and with an instability monitoring system according to any one of claims 11 or 12, wherein each bogie (12) is provided with at least one of the instability monitoring devices (10, 10A, 10B) of the instability monitoring system (300).

## Patentansprüche

1. Instabilitätsüberwachungsvorrichtung (10) für ein Schienenfahrzeug, umfassend:
- mindestens einen ersten Beschleunigungsaufnehmer (22A) zur Bereitstellung eines ersten Beschleunigungssignals in Antwort auf eine Vibration entlang einer Referenzachse (X-X),
- mindestens ein erstes Festkörper-Sicherheitsrelais (24a), das zwei Hauptanschlüsse (41a, 42a) aufweist und zwischen einem geschlossenen Zustand und einem offenen Zustand geschaltet werden kann,
**dadurch gekennzeichnet, dass** die Instabilitätsüberwachungsvorrichtung (10) weiter Folgendes umfasst:
- eine programmierbare logische Vorrichtung (20), die mit dem ersten Beschleunigungsaufnehmer (22A) und mit dem ersten Festkörper-Sicherheitsrelais (24a) verbunden ist, wobei die programmierbare logische Vorrichtung (20) ein feldprogrammierbare Gatter-Anordnung (FPGA) oder eine komplexe programmierbare logische Vorrichtung (CPLD) ist, die mit nicht flüchtigen logischen Blöcken ausgestattet ist, die gleichzeitig parallel laufen und einen Instabilitätsüberwachungsalgorithmus einführen, um den Zustand des ersten Festkörper-Sicherheitsrelais (24a) basierend auf einer Instabilitätsbedingung des ersten Beschleunigungssignals zu ändern, wobei die programmierbare logische Vorrichtung (20) einen nicht flüchtigen löschbaren und neu programmierbaren Speicher umfasst.

2. Instabilitätsüberwachungsvorrichtung nach Anspruch 1, wobei der Instabilitätsüberwachungsalgorithmus Folgendes umfasst:
- Vorverarbeitung des ersten Beschleunigungssignals
- Nachweis von Spitzen des vorverarbeiteten Beschleunigungssignals, die höher als eine vorbestimmte Beschleunigungsschwelle sind,
- Erhöhung eines Zählers, wenn die Zeit zwischen zwei aufeinander folgenden Spitzen innerhalb eines vorbestimmten Zeitfenster liegt,
- Aktivierung des Festkörper-Sicherheitsrelais (24a), wenn der Zähler eine vorbestimmte Zählerschwelle erreicht oder übersteigt, und
- Rücksetzung des Zählers, wenn keine Spitze innerhalb eines vorbestimmten Zeitraums festgestellt wurde.

3. Instabilitätsüberwachungsvorrichtung nach einem der vorhergehenden Ansprüche, wobei die vorverarbeitung des ersten Beschleunigungssignals die Verarbeitung des ersten Beschleunigungssignals durch einen Tiefpassfilter und einen Hochpassfilter umfasst.

4. Instabilitätsüberwachungsvorrichtung nach einem der vorhergehenden Ansprüche, weiter umfassend einen zweiten Beschleunigungsaufnehmer (22B) zur Bereitstellung eines zweiten Beschleunigungssignals in Antwort auf die Vibration entlang der Referenzachse (X-X), wobei der zweite Beschleunigungsaufnehmer (22B) mit der programmierbaren logischen Vorrichtung (20) verbunden ist, wobei der Instabilitätsüberwachungsalgorithmus den Zustand des ersten Festkörper-Sicherheitsrelais (24a) basierend auf einer Instabilitätsbedingung des ersten und des zweiten Beschleunigungssignals ändert,

5. Instabilitätsüberwachungsvorrichtung nach einem der vorhergehenden Ansprüche, wobei jeder des ersten und des zweiten Beschleunigungsaufnehmers (22A, 22B) Folgendes umfasst:
- eine Trägheitsmasse (221), die zwischen einer Ruheposition und zwei gegenüber liegenden Grenzen bewegt werden kann, die parallel zur Referenzachse (X-X) liegen, und
- eine interne Prüfschaltung zur Bewegung der Trägheitsmasse (221) aus einer Ruheposition zu einer der zwei gegenüberliegenden Grenzen in einer testbaren Richtung (DA, DB),
wobei die testbaren Richtungen des ersten und des zweiten Beschleunigungsaufnehmers (22A, 22B) einander gegenüber liegen, wobei die Beschleunigungssignale, die vom ersten und vom zweiten Beschleunigungsaufnehmer (22A, 22B) in Antwort auf Bewegungen jeder Trägheitsmasse (221) zwischen der Ruheposition und der anderen der zwei Grenzen in der Richtung erzeugt werden, die der testbaren Richtung gegenüber liegt, von der programmierbaren logischen Vorrichtung (20) ignoriert werden.

6. Instabilitätsüberwachungsvorrichtung nach einem der vorhergehenden Ansprüche, wobei das erste Festkörper-Sicherheitsrelais (24a) bei Abwesenheit eines Steuersignals offen ist und die programmierbare logische Vorrichtung (20) das Steuersignal unterbricht, um den Zustand des ersten Festkörper-Sicherheitsrelais (24a) basierend auf einer Instabilitätsbedingung des ersten Beschleunigungssignals zu ändern.

7. Instabilitätsüberwachungsvorrichtung nach einem der vorhergehenden Ansprüche, weiter umfassend ein zweites Festkörper-Sicherheitsrelais (24a), das mit der programmierbaren logischen Vorrichtung (20) verbunden ist, wobei der Algorithmus derart ist, dass er den Zustand des zweiten Festkörper-Sicherheitsrelais (24a) basierend auf der Instabilitätsbedingung des ersten Beschleunigungssignals ändert.

8. Instabilitätsüberwachungsvorrichtung nach Anspruch 7, wobei die Änderung des Zustands des ersten Festkörper-Sicherheitsrelais (24a) durch die Unterbrechung eines Wechselstrom-Steuersignals ausgelöst wird, das von der programmierbaren logischen Vorrichtung (20) gesteuert wird, während die Änderung des Zustands des zweiten Festkörper-Sicherheitsrelais (24b) durch die Unterbrechung eines Gleichstrom-Steuersignals ausgelöst wird, das durch die programmierbare logische Vorrichtung (20) gesteuert wird.

9. Instabilitätsüberwachungsvorrichtung nach einem der vorhergehenden Ansprüche, weiter umfassend eine Leiterplatte (14) zur Aufnahme der programmierbaren logischen Vorrichtung (20), des ersten Festkörper-Sicherheitsrelais (24a) und des ersten Beschleunigungsaufnehmers (22A) und, falls bereitgestellt, des zweiten Festkörper-Sicherheitsrelais (24b) und des zweiten Beschleunigungsaufnehmers (22B).

10. Instabilitätsüberwachungsvorrichtung nach einem der vorhergehenden Ansprüche, weiter ausgestattet mit einer Prüfschaltung (240a), umfassend:
- eine lokale Teststromversorgung (244),
- einen lokalen Teststromdetektor (243a)
- Testschalter (241a, 242a) zum Schalten der Instabilitätsüberwachungsvorrichtung (10) zwischen einem Testmodus und einem Betriebsmodus, so dass im Testmodus die Hauptanschlüsse der Sicherheitsschaltung zwischen der lokalen Teststromversorgung (244) und der lokalen Messvorrichtung verbunden sind, während im Betriebszustand die Hauptanschlüsse des Sicherheitsschalters von der lokalen Teststromversorgung (244) getrennt sind.

11. Instabilitätsüberwachungssystem (300) für ein Schienenfahrzeug, umfassend:
- eine Vielzahl von verteilten Instabilitätsüberwachungsvorrichtungen (10, 10A, 10B) nach einem der vorhergehenden Ansprüche,
- eine Sicherheitsschleife (302, 302A, 302B), die die ersten Festkörper-Sicherheitsrelais (24a) der Vielzahl von Instabilitätsüberwachungsvorrichtungen (10, 10A, 10B) in Reihe schaltet.

12. Instabilitätsüberwachungssystem nach Anspruch 11, wobei die Sicherheitsschleife (302, 302A, 302B) mit Folgendem ausgestattet ist:
- einer Stromversorgung (304) zur Versorgung der Sicherheitsschleife (302, 302A, 302B)
- einem Störungsdetektor (306a, 306b) zum Nachweis einer Änderung des Zustands von mindestens einem der ersten Festkörper-Sicherheitsrelais (24a) der Vielzahl von Instabilitätsüberwachungsvorrichtungen (10, 10A, 10B).

13. Schienenfahrzeug mit einer Vielzahl von Drehgestellen (12) und mit einem Instabilitätsüberwachungssystem nach einem der Ansprüche 11 oder 12, wobei jedes Drehgestell (12) mit mindestens einem der Instabilitätsüberwachungsvorrichtungen (10, 10A, 10B) des Instabilitätsüberwachungssystems (300) ausgestattet ist.

## Revendications

1. Dispositif de surveillance d'instabilité (10) pour un véhicule ferroviaire, comprenant :
- au moins un premier accéléromètre (22A) pour fournir un premier signal d'accélération en réponse à une vibration le long d'un axe de référence (X-X),
- au moins un premier relais statique de sécurité (24a), possédant deux bornes principales (41a, 42a) et étant commutable entre un état fermé et un état ouvert,
**caractérisé en ce que** le dispositif de surveillance d'instabilité (10) comprend en outre :
- un dispositif logique programmable (20) connecté au premier accéléromètre (22A) et au premier relais statique de sécurité (24a), le dispositif logique programmable (20) étant un réseau prédiffusé programmable par l'utilisateur (FPGA) ou un dispositif logique programmable complexe (CPLD) pourvu de blocs logiques non volatils fonctionnant simultanément en parallèle et implémentant un algorithme de surveillance d'instabilité pour changer l'état du premier relais statique de sécurité (24a) en fonction d'une condition d'instabilité du premier signal d'accélération, dans lequel le dispositif logique programmable (20) comprend une mémoire effaçable et reprogrammable non volatile.

2. Dispositif de surveillance d'instabilité selon la revendication 1, dans lequel l'algorithme de surveillance d'instabilité comprend :
- le prétraitement du premier signal d'accélération,
- la détection de crêtes du signal d'accélération prétraité qui sont plus hautes d'un seuil d'accélération prédéterminé,
- l'incrémentation d'un compteur si le temps entre deux crêtes consécutives est au sein d'une fenêtre temporelle prédéterminée,
- l'activation du relais statique de sécurité (24a) si le compteur atteint ou dépasse un seuil de compteur prédéterminé, et
- la remise à zéro du compteur si aucune crête n'a été détectée au sein d'une période prédéterminée.

3. Dispositif de surveillance d'instabilité selon une quelconque des revendications précédentes, dans lequel le prétraitement du premier signal d'accélération comprend le traitement du premier signal d'accélération par l'intermédiaire d'un filtre passe-bas et d'un filtre passe-haut.

4. Dispositif de surveillance d'instabilité selon une quelconque des revendications précédentes, comprenant en outre un second accéléromètre (22B) pour fournir un second signal d'accélération en réponse à une vibration le long de l'axe de référence (X-X), le second accéléromètre (22B) étant connecté au dispositif logique programmable (20), l'algorithme de surveillance d'instabilité changeant l'état du premier relais statique de sécurité (24a) en fonction d'une condition d'instabilité des premier et second signaux d'accélération.

5. Dispositif de surveillance d'instabilité selon une quelconque des revendications précédentes, dans lequel chacun des premier et second accéléromètres (22A, 22B) comprend :
- un massif anti-vibration (221) mobile entre une position de repos et deux limites opposées parallèles à l'axe de référence (X-X) et
- un circuit d'essai interne pour déplacer le massif anti-vibration (221) à partir d'une position de repos vers une des deux limites opposées dans une direction pouvant faire l'objet d'essai (DA, DB),
dans lequel les directions pouvant faire l'objet d'essai des premier et second accéléromètres (22A, 22B) sont opposées l'une à l'autre, les signaux d'accélération générés par les premier et second accéléromètres (22A, 22B) en réponse à des mouvements de chaque massif anti-vibration (221) entre la position de repos et l'autre des deux limites dans la direction opposée à la direction pouvant faire l'objet d'essai étant ignorés par le dispositif logique programmable (20).

6. Dispositif de surveillance d'instabilité selon une quelconque des revendications précédentes, dans lequel le premier relais statique de sécurité (24a) est ouvert en l'absence d'un signal de commande et le dispositif logique programmable (20) interrompt le signal de commande pour changer l'état du premier relais statique de sécurité (24a) en fonction d'une condition d'instabilité du premier signal d'accélération.

7. Dispositif de surveillance d'instabilité selon une quelconque des revendications précédentes, comprenant en outre un second relais statique (24b) connecté au dispositif logique programmable (20), l'algorithme étant tel à changer l'état du second relais statique de sécurité (24a) en fonction de la condition d'instabilité du premier signal d'accélération.

8. Dispositif de surveillance d'instabilité selon la revendication 7, dans lequel le changement d'état du premier relais statique de sécurité (24a) est déclenché par l'interruption un signal de commande CA commandé par le dispositif logique programmable (20) alors que le changement d'état du second relais statique de sécurité (24a) est déclenché par l'interruption d'un signal de commande CC commandé par le dispositif logique programmable (20).

9. Dispositif de surveillance d'instabilité selon une quelconque des revendications précédentes, comprenant en outre une carte de circuit imprimé (14) pour recevoir le dispositif logique programmable (20), le premier relais statique de sécurité (24a) et le premier accéléromètre (22A) et, s'ils sont prévus, le second relais statique de sécurité (24B) et le second accéléromètre (22B).

10. Dispositif de surveillance d'instabilité selon une quelconque des revendications précédentes, pourvu en outre d'un circuit d'essai (240a) comprenant :
- une alimentation électrique d'essai locale (244),
- un détecteur de courant d'essai local (243a),
- des commutateurs d'essai (241a, 242a) pour faire commuter le dispositif de surveillance d'instabilité (10) entre un mode d'essai et un mode de fonctionnement, de sorte que, dans le mode d'essai, les bornes principales du commutateur de sécurité soient connectées entre l'alimentation électrique d'essai locale (244) et le dispositif de mesure local alors que, dans l'état de fonctionnement, les bornes principales du commutateur de sécurité soient déconnectées de l'alimentation électrique d'essai locale (244).

11. Système de surveillance d'instabilité (300) pour un véhicule ferroviaire, comprenant :
- une pluralité de dispositifs de surveillance d'instabilité distribués (10, 10A, 10B) selon une quelconque des revendications précédentes,
- une boucle de sécurité (302, 302A, 302B) interconnectant les premiers relais statiques de sécurité (24a) de la pluralité de dispositifs de surveillance d'instabilité (10, 10A, 10B) en série.

12. Système de surveillance d'instabilité selon la revendication 11, dans lequel la boucle de sécurité (302, 302A, 302B) est pourvue de :
- une alimentation électrique (304) pour alimenter la boucle de sécurité (302, 302A, 302B),
- un détecteur de défaut (306a, 306b), pour détecter un changement d'état d'au moins un des premiers relais statiques de sécurité (24a) de la pluralité de dispositifs de surveillance d'instabilité (10, 10A, 10B).

13. Véhicule ferroviaire pourvu d'une pluralité de bogies (12) et d'un système de surveillance d'instabilité selon une quelconque des revendications précédentes 11 ou 12, dans lequel chaque bogie (12) est pourvu d'au moins un des dispositifs de surveillance d'instabilité (10, 10A, 10B) du système de surveillance d'instabilité (300).
